Europäisches Patentamt

European Patent Office                    (11) Numéro de publication:    **0 018 293**

Office européen des brevets                                            **B1**

(12)                        **FASCICULE DE BREVET EUROPEEN**

(45) Date de publication du fascicule du brevet: **27.03.85**        (51) Int. Cl.⁴: **G 01 T 1/14, G 01 T 1/142**

(21) Numéro de dépôt: **80400532.0**

(22) Date de dépôt: **18.04.80**

(54) **Perfectionnements aux dispositifs de mesure des paramètres susceptibles de modifier la charge d'un électret.**

(30) Priorité: **23.04.79 FR 7910225**
**11.02.80 FR 8002967**
**11.02.80 FR 8002968**

(43) Date de publication de la demande:
**29.10.80 Bulletin 80/22**

(45) Mention de la délivrance du brevet:
**27.03.85 Bulletin 85/13**

(84) Etats contractants désignés:
**AT BE CH DE GB IT LI LU NL SE**

(56) Documents cités:
**EP-A-0 007 272**
**FR-A-2 389 896**
**US-A-3 344 344**
**US-A-3 652 932**

(73) Titulaire: **Lewiner, Jacques**
**5, rue Bory d'Arnex**
**F-92210 Saint-Cloud (FR)**
(73) Titulaire: **Dreyfus, Gérard**
**Rue du Viaduc**
**Villebon S/Yvette F-91120 Palaiseau (FR)**
(73) Titulaire: **Perino, Didier**
**10, rue de Bellevue**
**F-92150 Suresnes (FR)**

(72) Inventeur: **Lewiner, Jacques**
**5, rue Bory d'Arnex**
**F-92210 Saint-Cloud (FR)**
Inventeur: **Dreyfus, Gérard**
**Rue du Viaduc**
**Villebon S/Yvette F-91120 Palaiseau (FR)**
Inventeur: **Perino, Didier**
**10, rue de Bellevue**
**F-92150 Suresnes (FR)**

(74) Mandataire: **Behaghel, Pierre et al**
**CABINET PLASSERAUD 84 rue d'Amsterdam**
**F-75009 Paris (FR)**

Courier Press, Leamington Spa, England.

# Description

L'invention est relative aux dispositifs pour mesurer un paramètre susceptible de modifier la charge électrique portée par un électret, paramètre tel que l'un des suivants:

— un rayonnement ionisant (rayons gamma, rayons X, neutrons) susceptible soit de décharger progressivement l'électret, soit de créer des ions au voisinage de cet électret et de le recouvrir ainsi progressivement d'une couche ionique neutralisant sa charge,
— la concentration d'un fluide, tel qu'une vapeur organique ou qu'un liquide, propre à décharger progressivement l'électret lors de sa mise en contact avec celui-ci,
— une température.

L'invention vise plus particulièrement, parmi ces dispositifs, ceux comportant, en plus de l'électret, deux électrodes conductrices encadrant cet électret parallèlement à celui-ci, une pièce d'écartement maintenant l'une au moins de ces électrodes à une certaine distance de l'électret de manière à réserver entre eux une chambre, des moyens pour permettre au paramètre à mesurer d'exercer son influence dans cette chambre en modifiant la charge de l'électret, un circuit électrique pour mesurer les modifications de champ électrique produites dans la chambre, un volet conducteur et des moyens pour engendrer un déplacement relatif entre d'une part l'ensemble constitué par l'électret et les électrodes et d'autre part le volet, déplacement effectué parallèlement à ces divers éléments d'une position de veille pour laquelle le volet est intérieur à la chambre à une position de mesure pour laquelle le volet est extérieur à la chambre et inversement.

L'invention a pour but, surtout, de rendre les dispositifs de mesure du genre en question tels qu'ils répondent mieux que jusqu'à ce jour aux diverses exigences de la pratique, notamment en ce qu'ils sont précis, simples, performants, portatifs, au moins pour ce qui est de la chambre de l'électret, et peu coûteux à fabriquer et à exploiter.

Le dispositif selon l'invention est caractérisé en ce qu'il comporte des moyens pour élaborer, lors de chaque déplacement relatif aboutissant à la position de mesure, une information représentative d'une différence entre deux charges d'électret, différence qui est liée à la mesure à effectuer, et en ce que le volet est double, c'est-à-dire comprend deux plateaux conducteurs parallèles propres à chevaucher l'électret pour la position de repos, chacun de ces plateaux s'étendant alors entre l'électret et une électrode.

Dans des modes de réalisation préférés, on a recours en outre à l'une et/ou à l'autre des dispositions suivantes:

— les deux plateaux du double volet sont recouverts extérieurement par des couches isolantes, elles-mêmes recouvertes extérieurement par des couches conductrices reliées de préférence au potentiel commun des deux électrodes,
— les composants du dispositif de mesure sont portés par deux ensembles distincts, savoir d'une part l'électret, les deux électrodes et la pièce d'écartement, par une cassette portative, et d'autre part, le circuit de mesure et de préférence le volet, par un appareil, éventuellement fixe, comprenant un logement propre à recevoir la cassette d'une manière amovible,
— dans un dispositif de mesure selon l'alinéa précédent, le circuit de mesure comprend un calculateur à mémoire permettant d'identifier chacune des cassettes mises en place successivement dans son logement, d'enregistrer pour chaque mise en place d'une cassette une information représentant l'état de charge de l'électret contenu dans cette cassette et d'élaborer pour chaque mise en place consécutive de cette cassette une information représentative de la décharge de l'électret intervenue depuis la mise en place précédente,
— le double volet est monté en porte-à-faux au fond d'une poche fixe d'un appareil de lecture de façon telle que ses deux plateaux, présentant respectivement des bords libres à profil biseauté ou arrondi, soient propres à guider le montage de la cassette en sa position de lecture à cheval, avec un léger jeu, sur ces plateaux, pour laquelle l'électret est disposé entre lesdits plateaux alors que les deux électrodes s'étendent au contraire le long des faces extérieures de ces plateaux,
— le dispositif de mesure est entièrement contenu dans un boîtier de poche,
— le boîtier ou cassette contenant la chambre à électret est étanche.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant aux dessins ci-annexés d'une manière bien entendu non limitative.

La figure 1, de ces dessins, montre schématiquement en coupe longitudinale un mode de réalisation de dispositif de mesure voisin du dispositif décret dans le document. US—A—3 652 952. Le dispositif selon la figure 1 ne constitue pas l'objet de l'invention et ne sera décret que pour expliquer les principes de fonctionnement et d'utilisation du dispositif conforme à l'invention.

La figure 2 illustre un mode d'utilisation d'un dispositif de mesure de ce genre.

Les figures 3 et 4 montrent schématiquement en coupes longitudinales deux modes de réalisation à double volet de dispositifs de mesure selon l'invention.

D'une façon connue en soi, le dispositif de mesure comprend:

— un électret 1, c'est-à-dire une feuille diélectrique (constituée notamment en un polymère hydrogéné et fluoré) chargée électriquement au voisinage d'au moins l'une de ses faces ainsi qu'il a été représenté par les signes—à titre illustratif, les charges en question pouvant être aussi bien positives que négatives,
— deux électrodes conductrices 2 et 3 encadrant cet élément 1 et constituées par deux feuilles ou plaques parallèles à celui-ci et solidarisées avec lui, l'une d'elles, 2, étant plus rapprochée que l'autre dudit électret et étant notamment en contact avec cet électret, dont elle peut constituer une simple métallisation,
— une pièce d'écartement 4 en matière isolante, notamment en forme de cadre rectangulaire, propre à maintenir l'autre électrode 3 à une certaine distance de l'électret de façon à réserver entre cette électrode et cet électret une chambre 5,
— et un circuit 6 pour exploiter aux fins de mesure les modifications de champ électrique produites entre les électrodes 2 et 3 par les modifications de charge de l'électret 1 dues à l'intervention du paramètre à mesurer.

L'ensemble est en effet agencé de façon telle que ce paramètre puisse exercer son influence dans la chambre 5 et modifier ainsi la charge de l'électret 1.

A cet effet l'un au moins des éléments composant ladite chambre est prévu transparent ou perméable audit paramètre.

C'est ainsi que, si ce paramètre est une irradiation ionisante, les électrodes peuvent être constituées en un métal léger tel que l'aluminium ou un alliage à base d'aluminium, ou encore en une matière plastique revêtue par métallisation d'un tel métal léger, des plages en métal plus noble pouvant alors être prévues sur ces électrodes au niveau de leurs connexions électriques avec le circuit 6.

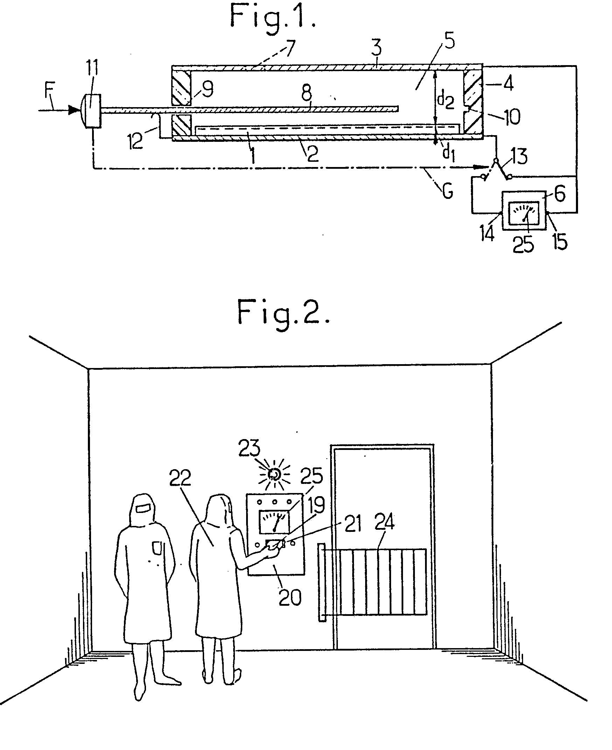

Si le paramètre en question est une concentration de fluide ou une température, des ouvertures telles que celles désignées par la référence 7 sur la figure 1 peuvent être prévues dans l'un au moins des éléments composant la chambre 5.

Selon d'autres variantes, l'un au moins de ces composants peut être constitué par un grillage, une plaquette perforée, ou un corps fritté à porosité suffisamment ouverte.

D'une façon également connue, mais pour des installations fixes de laboratoire, on fait comprendre au dispositif de mesure ci-dessus un volet conducteur et des moyens pour guider et déplacer ce volet dans la chambre 5, entre l'électret 1 et l'électrode 3, parallélement à cet électret et à cette électrode depuis une position de repos (ou "veille") à une position de mesure et inversement.

En outre, on prévoit des moyens pour élaborer, lors de chaque déplacement du volet l'amenant en sa position de mesure, une information représentative d'une différence entre deux charges d'électret, différence liée à la mesure à effectuer et sur laquelle en reviendra plus loin.

Le volet a été désigné par la référence 8 sur la figure 1 qui va être d'abord considérée.

Ses moyens de guidage peuvent être constitués de toute manière désirable, par exemple, ainsi qu'illustré, par un passage 9 traversant l'un des côtés de la pièce d'écartement 4 et par des rainures 10 évidées dans les faces intérieures de cette pièce 4.

Les moyens de déplacement du volet peuvent également être constitués de toute façon désirable; ils ont été schématisés par le bouton de manoeuvre 11 et la flèche F.

Bien que ce bouton puisse être solidarisé avec le volet 8, il peut être avantageux pour certaines applications de le relier audit volet par l'intermédiaire d'un mécanisme multiplicateur permettant de commander l'introduction totale du volet 8 à intérieur de la chambre 5, ainsi que son dégagement subséquent, moyennant des déplacements du bouton 11 de beaucoup plus faible amplitude, qui peuvent être aussi bien des rotations que des translations.

Les commandes schématisées par la flèche F sur la figure 1, qui concernant aussi bien l'enfoncement du volet 8 dans la chambre 5 que son déplacement hors de cette chambre, sont en général effectuées manuellement si l'ensemble est portatif.

Mais elles peuvent également être commandées automatiquement par des moyens motorisés, en particulier dans l'hypothèse—décrite plus loin—où l'ensemble est décomposé en deux sous-ensembles, l'un portatif propre à recueillir l'information à mesurer et l'autre fixe, propre à effectuer la mesure et à coopérer momentanément avec le sous-ensemble portatif lorsque ce dernier est mis en place sur lui.

Le volet 8 peut occuper ici:

— une première position pour laquelle il est totalement enfoncé dans la chambre 5 et cache alors totalement l'électret 1 à l'électrode 3 selon la direction transversale, c'est-à-dire perpendiculaire à ces deux éléments,
— et une seconde position pour laquelle, au contraire, il est totalement sorti de la chambre 5, rendant alors apparente à l'électrode 3, selon ladite direction transversale, la totalité de la face chargée de l'électret 1.

L'une de ces deux positions peut être considérée comme définissant l'état "de veille" du dispositif, au cours duquel celui-ci recueille l'information destinée à être exploitée pour la mesure, et l'autre, comme définissant l'état "de mesure" proprement dit.

Par ailleurs, le volet 8 est ici relié électriquement en permanence à l'électrode 2 par un fil conducteur 12, et un commutateur électrique 13 actionnable automatiquement par les déplacements du volet 8 (ce qui a été schématisé par la flèche G) permet:

— soit de relier électriquement l'une à l'autre les deux électrodes 2 et 3, comme supposé sur la figure 1, lorsque le dispositif se trouve à l'état de veille,

— soit de relier électriquement ces deux électrodes 2 et 3 à respectivement, les deux bornes 14 et 15 du circuit d'exploitation 6, de préférence dès le début du déplacement du volet 8 pour passer à l'état de mesure.

Pour éviter que des champs électriques parasites ne viennent fausser la mesure, il est avantageux de protéger l'électrode 3 par un blindage électrostatique (non représenté), constitué de préférence par une grille conductrice reliée électriquement à l'électrode 2.

Le fonctionnement de ce dispositif de mesure est le suivant.

Lorsque le volet 8 est totalement enfoncé dans la chambre 3, les charges de l'électret ne sont pas "visibles" de l'électrode 3 et ne créent aucune charge sur cette dernière.

Au contraire lorsque le volet est retiré, ces charges deviennent apparentes pour l'électrode 3 et créent aussitôt à proximité de cette électrode un champ électrique qui induit sur elle une charge "image" q proportionnelle à la densité superficielle $\sigma$ desdites charges de l'électret.

Par cette densité superficielle $\sigma$, on entend ici la densité "apparente" pour l'électrode 3, c'est-à-dire la densité superficielle proprement dite des charges de l'électret, sauf si la face chargée de celui-ci est masquée par des ions rapportés sur elle et neutralisant partiellement son influence à distance: dans ce dernier cas c'est la densité globale résultant à distance de ladite densité superficielle et des ions de masquage qui est prise en considération et désignée par $\sigma$.

Si on appelle $d_1$ et $d_2$ les distances entre la face chargée de l'électret et respectivement les deux électrodes 2 et 3, $\varepsilon_1$ et $\varepsilon_2$ les permittivités respectives de l'électret 1 et du fluide remplissant la chambre 5, et S la surface de l'électret qui est apparente pour l'électrode 3, la charge-image q est égale à chaque instant à:

$$\sigma\, S.\frac{d_1}{d_2}\,.\,\frac{\varepsilon_1}{\varepsilon_2}$$

Lors de chaque déplacement du volet 8 faisant passer celui-ci de sa position de veille à sa position de mesure, la charge-image sur l'électrode 3 varie de la quantité q ci-dessus, soit dans le sens positif de O à q si ce déplacement est un retrait, soit dans le sens négatif de q à O si ce déplacement est un enfoncement.

La manifestation du paramètre à mesurer dans la chambre 5 réduit progressivement la densité $\sigma$, soit parce que la charge réelle de l'électret diminue, soit parce que des ions créés ou circulant dans la chambre 5 en regard de l'électret sont entraînés par le champ électrique produit par cet électret par suite captés par celui-ci.

Les variations de charge-image (q ou -q) susceptibles d'être successivement créées sur l'électrode 3 par les déplacements du volet sont alors réduites en conséquence et cette réduction est d'autant plus rapide que la valeur du paramètre à mesurer est elle-même plus élevée.

Si l'on désirait se contenter de mesurer les variations progressives de la charge-image en question, il serait nécessaire, surtout lorsque ces variations sont lentes, de choisir pour l'impédance d'entrée du circuit de mesure 6 relié aux bornes du condensateur formé par les deux électrodes 2 et 3 une valeur quasiment infinie.

Mais un tel choix rendrait le dispositif sensible aux champs électromagnétiques extérieurs ainsi qu'à la création de chemins conducteurs parasites et, pour écarter cet inconvénient, on donne à l'impédance d'entrée en question une valeur finie, bien qu'élevée: dans un tel cas le condensateur ci-dessus se décharge progressivement dans le temps à travers ladite impédance.

Par conséquent, si aucune remise à zéro n'est prévue, la valeur de la charge-image s'écarte progressivement de l'image fidèle du paramètre à mesurer et le dispositif n'est plus fiable.

Cet inconvénient est supprimé par les manoeuvres de va-et-vient du volet 8, manoeuvres comprenant successivement une introduction totale dudit volet dans la chambre 5 suivie de son dégagement total hors de cette chambre ou inversement.

En effet, lors d'une telle manoeuvre, le dispositif est totalement rénové, la variation de la charge-image apparaissant immédiatement après cette manoeuvre sur l'électrode 3 est exactement l'image désirée de la densité de charge $\sigma$ sur l'électret au même instant et le circuit de mesure 6 peut être choisi parmi ceux exploitant des variations relativement rapides d'une telle charge-image (de 0 à q ou de q à 0).

Ce circuit de mesure, qui présente toujours une résistance d'entrée relativement élevée, peut comporter à son entrée, soit un amplificateur de charge présentant une grande capacité ramenée à l'entrée, soit un amplificateur de tension à faible capacité d'entrée.

Pour effectuer la mesure du paramètre désirée, il suffit alors:

— de procéder une première fois à la manoeuvre de va-et-vient ci-dessus, accompagnée de la lecture, en un premier instant $t_1$ situé entre les deux déplacements de ce va-et-vient, de la valeur $q_1$ de la charge-image à cet instant,

— puis de faire agir ledit paramètre dans la chambre 5,

— et enfin de procéder une deuxième fois à la manoeuvre de va-et-vient ci-dessus accompagnée de la lecture, en un second instant $t_2$ situé entre les deux déplacements de ce va-et-vient, de la valeur $q_2$ de la charge-image q à ce second instant.

L'intensité du paramètre est proportionnelle à la différence $q_2 - q_1$ et peut l'être également au temps $t_2 - t_1$.

Le circuit de mesure 6 comporte des moyens pour élaborer une information proportionnelle à cette différence de charges-images $q_2 - q_1$, laquelle différence est proportionnelle à la différence des densités de charge d'électret que reflètent ces charges-images et donc en définitive à la différence des charges d'électret correspondantes. Cette information est de préférence directement affichée sur un cadran approprié 25 d'une manière analogique ou numérique.

Dans le cas de l'affichage analogique, on peut effectuer une mise à zéro mécanique du dispositif de mesure au temps $t_1$ en déplaçant une échelle de lecture mobile par rapport à l'aiguille de lecture, ou encore en décalant cette aiguille elle-même.

Dans le cas de l'affichage numérique, on peut utiliser un convertisseur analogique-numérique, une mémoire propre à emmagasiner l'information élaborée à l'instant $t_1$ et un calculateur pour soustraire automatiquement cette information de celle du même type élaborée à l'instant $t_2$.

Dans chaque cas on peut associer la mesure à un enregistrement, à un processus d'identification et/ou à un contrôle propre à déclencher un système d'alarme.

Lorsque le paramètre à détecter est autre que la température, il peut être avantageux de s'affranchir des variations de la charge-image q qui sont dues aux seules dilatations thermiques de la pièce d'écartement 4, lesquelles se traduisent par des variations de la distance $d_2$ intervenant dans l'expression de la densité σ.

Selon une disposition particulièrement originale, ce réultat est obtenu en choisissant pour constituer ladite pièce 4 un matériau ayant le même coefficient de dilatation thermique que l'électret.

On constate en effet que, dans ce cas, les deux distances $d_1$ et $d_2$ varient encore avec la température, mais non plus leur rapport $d_1/d_2$, qui seul intervient dans l'expression considérée.

C'est là un avantage particulièrement intéressant car, faute de prévoir le perfectionnement indiqué, les seules dilatations thermiques réduiraient à $10^{-4}$ la précision de mesure dès lors qu'une variation de 10°C serait tolérée sur les températures de mesure.

Selon une variante applicable ou dispositif conforme à la figure 1, on relie en permanence entre elles les deux électrodes 2 et 3 et on ne relie entre eux l'électrode 2 et le volet 8 que pour l'état de veille du dispositif, ledit volet étant automatiquement relié, dès que l'on passe à l'état de mesure, à la borne 15 du circuit 6: dans ce cas l'électrode 3 sert directement de blindage électrostatique pour le volet 8 et les charges-images exploitées aux fins de mesure sont celles recueillies sur ce volet 8.

Dans une telle variante les principes de fonctionnement sont sensiblement les mêmes que ceux décrits ci-dessus.

Bien entendu, dans les calculs, on remplacera la distance $d_2$ entre la couche chargée de l'électret 1 et l'électrode 3 par la distance entre cette couche chargée et le volet 8. De même la portion de la pièce d'écartement 4 qu'il convient de constituer en un matériau présentant le même coefficient de dilatation thermique que l'électret est la portion, de cette pièce, disposée transversalement entre l'électrode 2 et le volet 8.

Selon une autre variante applicable ou dispositif conforme à la figure 1, les rôles dévolus respectivement aux électrodes 2 et 3 dans le mode de réalisation de la figure 1 sont permutés, l'électrode 3 étant alors reliée électriquement en permanence au volet 8 et au blindage électrostatique, s'il en est prévu un, et les charges-images exploitées aux fins de mesure lors des va-et-vient du volet étant alors celles qui apparaissent sur l'électrode 2.

Les connexions électriques entre d'une part, les électrodes 2 et 3 et d'autre part, les bornes 14 et 15 du circuit 6 (une électrode pouvant être remplacée par le volet 8) peuvent n'être réalisées qu'aux instants de lecture $t_1$ et $t_2$.

Le dispositif conforme à la figure 1 se prête particulièrement à la constitution d'un capteur portatif remarquablement simple et léger comprenant uniquement, dans un boîtier compact 19 (figure 2), la chambre 5, c'est-à-dire l'électret 1, les deux électrodes 2 et 3, la pièce d'écartement 4, les écrans de blindage éventuels, et des moyens de connexion électrique amovible en attente.

Ce capteur est complété par un appareil fixe 20 comportant:

— un logement 21 propre à recevoir ledit boîtier 19 en une position bien déterminée,
— le volet 8,
— des moyens d'actionnement pour faire subir à ce volet les va-et-vient nécessaires,
— des moyens pour établir les connexions électriques amovibles avec ceux, complémentaires, prévus sur le boîtier 19,
— et des moyens pour effectuer les lectures et mesures.

Cet appareil 20 est en outre avantageusement associé à des moyens d'identification, de mémoire, de calcul, de contrôle et d'alarme.

Un tel ensemble se prête particulièrement bien à la surveillance du personnel évoluant dans une enceinte susceptible d'être soumise à des irradiations ionisantes.

A cet effet, l'appareil 20 est placé au voisinage de l'accès de ladite enceinte et un boîtier 19 du genre ci-dessus portant des signes d'identification, est remis à chaque membre 22 du personnel concerné.

En pénétrant dans l'enceinte, chacun de ces membres introduit son boîtier 19 dans le logement 21 de l'appareil 20 comme dans un composteur de billet.

L'appareil enregistre alors l'identification du porteur, l'instant du "compostage"—instant qui correspond à celui $t_1$ de l'exemple donné ci-dessus—et la première mesure de la charge q, après avoir commandé la manoeuvre de volet nécessaire.

A la fin de son séjour dans l'enceinte à surveiller, le porteur 22 introduit à nouveau son boîtier 19 dans le logement 21 de l'appareil 20 et ce dernier après avoir commandé la nouvelle manoeuvre nécessaire du volet correspondant, affiche directement en 25 la dose d'irradiation reçue par le porteur au cours de son séjour dans l'enceinte ci-dessus.

On peut même prévoir que cet appareil commande l'émission d'un signal d'alarme, tel que l'allumage d'un voyant 23 et/ou déclenche l'intervention d'un système de sécurité, tel que la fermeture d'une barrière 24, si la dose en question dépasse un seuil considéré comme dangereux et impliquant l'intervention d'une équipe de décontamination.

Selon une possibilité de réalisation du dispositif conforme à la figure 1, le volet est porté par le boîtier 19 au lieu d'être porté par l'appareil fixe 20 et les moyens de manoeuvre de ce volet sont encore portés par cet appareil.

On peut noter également que, dans ce dernier cas, l'une des électrodes pourrait être portée par l'appareil fixe 20 au lieu de l'être par le boîtier 19.

L'électret 1, le fluide en contact avec lui et les électrodes peuvent être constitués de toute manière désirable, notamment de l'une de celles qui ont été décrites dans le brevet FR—A— 2 389 896.

En particulier, il peut être avantageux de constituer l'électrode 2 par une mince couche d'aluminium rapportée par métallisation sur l'électret 1 et l'électrode 3 par une plaquette d'aluminium.

Quant au volet, il est constitué par une plaquette plate en un matériau conducteur de l'électricité tel que notamment l'aluminium ou un matériau isolant recouvert d'une mince couche d'aluminium sur ses deux faces, et son épaisseur est généralement comprise entre 0,1 mm et 5 mm, étant de préférence de l'ordre de 2 mm.

Si nécessaire, des moyens d'étanchéité pourront être prévus au droit du passage 9 pour interdire la pénétration de poussières dans la chambre 5 et/ou, l'échappement du fluide contenu dans cette chambre, de façon notamment à maintenir constante la pression interne de ladite chambre.

De même on prévoira avantageusement des moyens pour nettoyer les portions du volet extérieures à la chambre avant leur introduction dans celle-ci, par exemple en les faisant passer entre deux rouleaux élastiquement appliqués contre ce volet de part et d'autre de celui-ci.

Les déplacements du volet peuvent être plus ou moins rapides, la durée de chacun d'eux étant notamment de l'ordre de la seconde et plus généralement comprise entre 1/10 de seconde et plusieurs dizaines de secondes.

Le délai de lecture après passage du volet de son état de veille à son état de lecture est généralement de l'ordre de quelques secondes.

Avec les constructions ci-dessus décrites et relatives au dispositif suivant la figure 1, le volet conducteur est simple et est donc disposé d'un seul côté de l'électret lorsqu'il est introduit dans la chambre: il masque alors cet électret à la vue d'une seule électrode.

Avec une telle construction, il est nécessaire de faire participer l'une au moins des deux électrodes à chaque mesure et les distances entre les électrodes et éventuellement entre celles-ci et le volet doivent être déterminées avec une grande exactitude, exigence qui présente quelquefois certaines difficultés de mise en oeuvre.

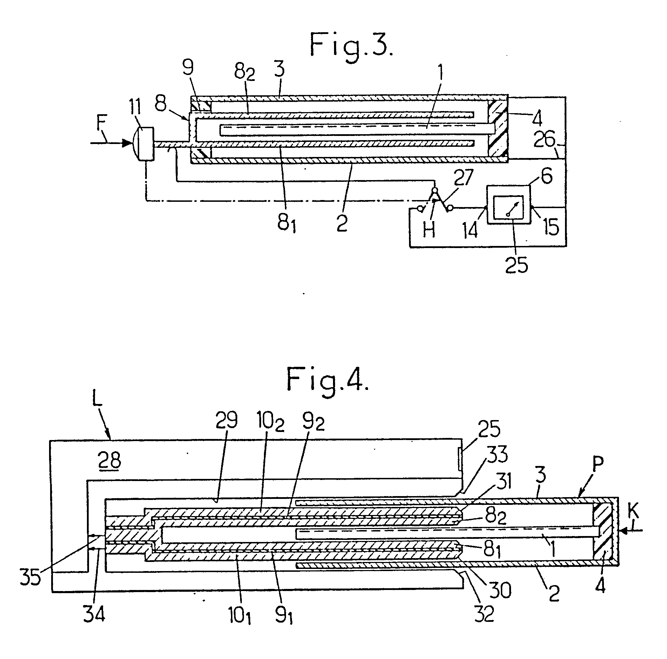

Pour remédier à cet inconvénient, selon l'invention, on a recours à un volet conducteur double, c'est-à-dire comprenant deux plateaux conduc-teurs parallèles $8_1$, $8_2$ (figures 4 et 5) formant ensemble une même pièce conductrice et susceptibles de chevaucher l'électret, chacun de ces deux plateaux étant prévu pour s'étendre entre ledit électret et l'une des deux électrodes.

Comme précédemment expliqué lors de la description du dispositif selon la figure 1, le double volet peut occuper, par rapport à l'électret, deux positions extrêmes pour l'une desquelles il est totalement dégagé des intervalles ou chambres compris entre cet électret et les électrodes, alors qu'au contraire, pour l'autre position extrême, il est totalement enforcé dans ces chambres, ainsi qu'illustré sur la figure 3.

Avec une telle construction, l'instant de chaque mesure correspond soit à la mise en place du double volet en cette dernière position de chevauchement complet de l'électret 1, mise en place effectuée en enfonçant le volet 8 dans le cassette 2, 3, 4 selon la flèche F à partir de sa position sortie, soit au contraire au dégagement inverse intégral du volet hors de la cassette à partir de sa position totalement enfoncée.

Les deux électrodes 2 et 3 sont avantageusement court-circuitées en permanence, comme schématisé par le conducteur 26, leur potentiel commun étant appliqué en permanence à l'une des deux bornes du circuit 6.

Le volet 8 est relié à ce potentiel commun pendant les périodes de veille du dispositif au cours desquelles la charge de l'électret diminue progressivement sans être spécialement mesurée.

Aux instants de mesure, ledit volet 8 est au contraire relié à l'autre borne 14 du circuit 6: le branchement correspondant est assuré automatiquement par un commutateur 27 actionné notamment par les débuts d'enfoncement du volet dans la cassette, action schématisée par la flèche H sur la figure 4.

Il est à noter qu'aux instants où le double volet 8 est totalement enfoncé dans la cassette 2, 3, 4, l'électret 1 est entouré pratiquement en totalité par ce double volet: ce dernier est donc influencé intégralement par la charge de cet électret et ce, quelles que soient les distances respectives entre ce dernier et chacun des plateaux $8_1$, $8_2$.

C'est là un avantage important car il n'est plus nécessaire de respecter avec une grande exactitude les exigences relatives aux positions respectives (distance et parallélisme) des différents composants du dispositif, en particulier lorsque la position de mesure du volet correspond à l'enfoncement total de celui-ci dans la cassette: une tolérance relativement large peut même alors être admise sur le jeu transversal affectant les va-et-vient du volet dans la cassette.

Pour bénéficier des avantages indiqués, il convient bien entendu de choisir un électret de type monopolaire de façon que l'effet global de charge de cet électret sur le volet qui l'entoure ne soit pas nul.

On notera que, dans la solution proposée, la mesure effectuée est également indépendante de la migration éventuelle des charges à l'intérieur de l'électret au cours de la vie de celui-ci.

On peut envisager de nombreuses variantes de dispositifs de mesure à double volet mettant en application les principes exposés ci-dessus.

On va maintenant décrire l'une de ces variantes en se référant à la figure 4.

Celle-ci diffère essentiellement de la précédente par les deux caractéristiques suivantes:

— en premier lieu, le double volet est fixe au lieu d'être mobile,
— en second lieu, chaque plateau $8_1$ et $8_2$ de ce volet est recouvert extérieurement, successivement, d'une couche isolante $9_1$, $9_2$ et d'une couche conductrice $10_1$, $10_2$.

La position fixe du volet est choisie à demeure dans un appareil de lecture L équipé d'une unité 28 de lecture, de mesure et d'affichage (comprenant) le circuit 6 ci-dessus avec ses moyens d'affichage 25), appareil propre à recevoir lui-même, dans une poche 29, des cassettes portatives P réduites à leur plus simple expression, c'est-à-dire composées chacune de l'électret 1, des deux électrodes 2 et 3 et de leur cadre d'écartement 4 ainsi qu'éventuellement d'organes de connexion électrique.

Les deux plateaux $8_1$ et $8_2$ du volet sont montés en porte-à-faux au fond de la poche 29 et leurs bords ou tranches libres 30 et 31 sont biseautés ou arrondis de manière à guider les introductions des cassettes "réduites" P dans cette poche 29, selon la flèche K.

D'autres plages à profil biseauté ou arrondi 32, 33 complètent avantageusement la "triple fente" délimitant la section d'ouverture extérieure de la poche 29, lesdites plages 32 et 33 pouvant être disposées au même niveau transversal que les bords 30 et 31 ci-dessus, comme visible sur la figure 2.

L'ensemble des deux couches conductrices extérieures $10_1$ et $10_2$, formant blindage électrostatique pour le volet, est relié en permanence par un conducteur 34 à un potentiel commun qui peut être celui de la masse, comme celui auquel sont portées les deux électrodes 2 et 3 des différentes cassettes portatives "réduites", alors que les deux plateaux $8_1$ et $8_2$ composant le double volet sont encore reliés par un conducteur 35 à l'appareil de mesure (compris par l'unité 28) pour chaque mesure, c'est-à-dire de préférence dès le début de l'introduction de chaque cassette réduite P dans la poche 29.

Bien entendu un volet escamotable peut être prévu pour fermer la face frontale de la cassette P (considérée dans le sens de la flèche K) hors des instants où cette cassette est introduite dans la poche 29 du lecteur L, volet susceptible d'être fermé de façon totalement étanche.

De même tous moyens désirables peuvent être prévue pour permettre l'identification de cette cassette P lors des susdites introductions ainsi que la mise en mémoire, dans l'unité 28, d'informations relatives à cette identification et à la charge alors mesurée de son électret.

Il est à noter que cette variante ne fait appel à aucun contact électrique à éléments glissants ou plus généralement mobiles lors de la mise en place des cassettes réduites P dans le lecteur L.

Il est à noter également que les jeux transversaux existant entre les trois fentes de la poche 29 et les languettes 1, 2, 3 qu'elles reçoivent peuvent être relativement élevés, la largeur de chaque fente étant par exemple supérieure de 0,5 mm à l'épaisseur de la languette à recevoir.

Le dispositif de mesure à volet double décrit ci-dessus présente de nombreux avantages par rapport à ceux antérieurement connus, notamment en ce qui concerne la précision, la fiabilité et la sensibilité de la mesure (celle-ci pouvant s'étendre aussi bien aux rayonnements X qu'aux rayonnements gamma ou neutroniques), la simplicité de la fabrication et de la mise en oeuvre, le faible prix d'obtention et d'exploitation et le caractère portatif.

## Revendications

1. Dispositif pour mesurer un paramètre susceptible de modifier la charge électrique portée par un électret (1) comportant, en plus d'un tel électret, deux électrodes conductrices (2, 3) encadrant cet électret (7) parallèlement à celui-ci, une pièce d'écartement (4) maintenant l'une au moins de ces électrodes (2, 3) à une certaine distance de l'électret (7) de manière à réserver entre eux une chambre (5), des moyens pour permettre au paramètre à mesurer d'exercer son influence dans cette chambre (5) en modifiant la charge de l'électret (7), un circuit électrique (6) pour mesurer les modifications du champ électriques produites dans la chambre (5), un volet conducteur (8) et des moyens (11) pour engendrer un déplacement relatif entre, d'une part, l'ensemble constitué par l'électret (1) et les électrodes (2, 3) et d'autre part, le volet (8), déplacement effectué parallèlement à ces divers éléments d'une position de veille pour laquelle le volet (8) est intérieur à la chambre (5) à une position de mesure pour laquelle le volet (8) est extérieur à la chambre et inversement, caractérisé en ce qu'il comporte des moyens (6) pour élaborer, lors de chaque déplacement relatif aboutissant à la position de mesure, une information représentative d'une différence entre deux charges d'électret, différence qui est liée à la mesure à effectuer, et en ce que le volet (8) est double, c'est-à-dire comprend deux plateaux conducteurs parallèles ($8_1$, $8_2$) propres à chevaucher l'électret (1) pour la position de repos, chacun de ces plateaux s'étendant alors entre l'électret (7) et une électrode (2, 3).

2. Dispositif de mesure selon la revendication 1, caractérisé en ce que les deux plateaux ($8_1$, $8_2$) du double volet (8) sont recouverts extérieurement par des couches isolantes ($9_1$, $9_2$), elles-mêmes recouvertes extérieurement par des couches conductrices ($10_1$, $10_2$) reliées de préférence au potentiel commun des deux électrodes (2, 3).

3. Dispositif de mesure selon l'une quelconque des revendications précédentes, caractérisé en ce que ses composants sont portés par deux ensembles distincts, savoir d'une part l'électret (1), les deux électrodes (2, 3) et la pièce d'écartement (4), par une cassette portative (19, P) et, d'autre part, le circuit de mesure (6) et de préférence le volet (8), par un appareil (20, L), éventuellement fixe, comprenant un logement (21, 29) propre à recevoir la cassette d'une manière amovible.

4. Dispositif de mesure selon la revendication 3, caractérisé en ce que le circuit de mesure comprend un calculateur à mémoire permettant d'identifier chacune des cassettes mises en place successivement dans son logement, d'enregistrer pour chaque mise en place d'une cassette une information représentant l'état de charge de l'électret contenu dans cette cassette et d'élaborer pour chaque mise en place consécutive de cette cassette une information représentative de la décharge de l'électret intervenue depuis la mise en place précédente.

5. Dispositif de mesure selon l'une quelconque des précédentes revendications, caractérisé en ce que le double volet (8) est monté en porte-à-faux au fond d'une poche fixe (29) d'un appareil de lecture (L) de façon telle que ses deux plateaux ($8_1$, $8_2$), présentant respectivement des bords libres (30, 31) à profil biseauté ou arrondi, soient propres à guider le montage de la cassette (P) en sa position de lecture à cheval, avec un léger jeu, sur ces plateaux, pour laquelle l'électret (1) est disposé entre lesdits plateaux alors que les deux électrodes (2, 3) s'étendent au contraire le long des faces extérieures de ces plateaux.

6. Dispositif de mesure selon l'une quelconque des précédentes revendications, caractérisé en ce qu'il est entièrement contenu dans un boîtier de poche.

7. Dispositif de mesure selon l'une quelconque des précédentes revendications, caractérisé en ce que le boîtier ou cassette contenant la chambre à électret est étanche.

## Patentansprüche

1. Vorrichtung zur Messung einer physikalischen Größe, die den Ladungszustand eines Elektreten (1) verändern kann,

mit zwei leitfähigen Elektroden (2, 3), die den Elektreten (1) parallel umrahmen,

mit einem Abstandsteil (4), das wenigstens eine der Elektroden (2, 3) in einem vorgegebenen Abstand zu dem Elektreten (1) hält, so daß zwischen ihnen eine Kammer (5) verbleibt,

mit Mitteln, die der zu messenden physikalischen Größe eine Einflußnahme innerhalb der Kammer (5) und damit eine Änderung der Ladung des Elektreten (1) ermöglichen,

mit einer elektrischen Meßschaltung zur Messung der in der Kammer (5) bewirkten Änderung des elektrischen Feldes,

sowie mit einem leitfähigen Schieber (8) und Mitteln (11) zur Erzeugung einer Relativbewegung zwischen der von dem Elektreten (1) und den Elektroden (2, 3) gebildeten Einheit einerseits und dem Schieber (8) andererseits, wobei diese Bewegung parallel zu den verschiedenen Elementen aus einer Ruheposition, bei der der Schieber (8) sich im Innern der Kammer (5) befindet, in eine Meßposition, bei der der Schieber (8) sich außerhalb der Kammer (5) befindet, erfolgt und umgekehrt,

dadurch gekennzeichnet,

daß Mittel (6) vorgesehen sind, die bei jeder in die Meßposition führenden Relativbewegung eine Information erarbeiten, die für eine Differenz zwischen zwei Ladungszuständen des Elektreten kennzeichnend ist, welche von der durchzuführenden Messung abhängt,

und daß der Schieber (8) ein Doppelschieber ist, d.h. zwei parallele leitfähige Platten ($8_1$, $8_2$) besitzt, die so angeordnet sind, daß sie den Elektreten (1) in der Ruheposition überlappen, wobei jede dieser Platten sich dann zwischen dem Elektreten (1) und einer Elektrode (2, 3) erstreckt.

2. Vorrichtung nach Anspruch 1, dadurch gekennzeichnet, daß die beiden Platten, ($8_1$, $8_2$) des Doppelschiebers (8) außen von isolierenden Schichten ($9_1$, $9_2$) bedeckt sind, die ihrerseits außen von leitfähigen Schichten ($10_1$, $10_2$) bedeckt sind, welche vorzugsweise mit dem gemeinsamen Potential der beiden Elektroden (2, 3) verbunden sind.

3. Vorrichtung nach Anspruch 1 oder 2, dadurch gekennzeichnet, daß ihre Komponenten von zwei getrennten Einheiten gegetragen sind, nämlich

— der Elektret (1), die beiden Elektroden (2, 3) und das Abstandsteil (4) von einer tragbaren Kassette (19, P) und
— die Meßschaltung (6) und vorzugsweise der Schieber (8) von einem gegebenenfalls ortsfesten Gerät (20, L), daß eine Aufnahme (21, 29) enthält, in welche die Kassette lösbar eingesetzt werden kann.

4. Vorrichtung nach Anruch 3, dadurch gekennzeichnet, daß die Meßschaltung einen mit einem Speicher versehenen Rechner für die Durchführung folgender Funktionen beinhaltet:

— Identifizierung jeder der aufeinanderfolgend in die Aufnahme eingesetzten Kassetten,
— bei jedem Einsetzen einer Kassette Registrierung einer Information, die für den Ladungszustand des in dieser Kassette enthaltenen Elektreten kennzeichnend ist, sowie
— bei jedem nächstfolgenden Einsetzen dieser Kassette Gewinnung einer Information, die für die seit dem vorangehenden Einsetzen dieser Kassette erfolgte Entladung des in ihr enthaltenen Elektreten kennzeichnend ist.

5. Vorrichtung nach einem der vorhergehenden Ansprüche, dadurch gekennzeichnet, daß der Doppelschieber (8) auf dem Boden einer festen Tasche (29) eines Lesegerätes (L) derart freitragend montiert ist, daß seine beide Platten (8₁, 8₂), deren freie Ränder (30, 31) ein abgeschrägtes bzw. abgerundetes Profil besitzen, die Kassette (P) bei ihrem Einsetzen in ihre Leseposition in geeigneter führen, und daß die Kassette in der Leseposition mit leichtem Spiel rittlings derart auf den Platten aufsitzt, daß der Elektret (1) zwischen den genannten Platten angeordnet ist, sobald die beiden Elektroden (2, 3) sich längs der Außenseiten dieser Platten erstrecken.

6. Vorrichtung nach einem der vorhergehenden Ansprüche, dadurch gekennzeichnet, daß sie mit allen ihren Teilen in einem Taschenbehälter enthalten ist.

7. Vorrichtung nach einem der vorhergehenden Ansprüche, dadurch gekennzeichnet, daß der Behälter oder die Kassette, die die Elektretkammer enthalten, abgedichtet ist.

**Claims**

1. Device for measuring a parameter capable of modifying the electrical charge borne by an electret (1), comprising, in addition to such an electret, two conductive electrodes (2, 3) framing this electret (1) parallel to the latter, a separating part (4) keeping one at lesat of these electrodes (2, 3) at a certain distance from the electret (1) so as to preserve a chamber (5) between them, means for enabling the parameter to be measured to exercise its influence in this chamber (5) by modifying the charge of the electret (1), an electrical circuit (6) for measuring the modifications of the electrical field produced in the chamber (5), a conductive shutter (8) and means (11) for creating a relative movement between, on the one hand, the whole made of the electret (1) and the electrodes (2, 3) and, on the other hand, the shutter (8), said movement being made parallel to these various elements from a standby position for which the shutter (8) is inside the chamber (5) to a measuring position for which the shutter (8) is outside the chamber and conversely, characterized in that is comprises means (6) for developing on each relative movement ending into the measuring position, information representing a difference between two electret charges, which difference is linked with the measurement to be carried out, and in that the shutter (8) is double, i.e. comprises two parallel conductive plates (8₁, 8₂) adapter to straddle the electret (1) for the resting position, each of these plates extending then between the electret (1) and an electrode (2, 3).

2. Measuring device according to claim 1, characterized in that the two plates (8₁, 8₂) of the double shutter (8) are covered externally by insulating layers (9₁, 9₂) themselves covered externally by conductive layers (10₁, 10₂) preferably connected to the common potential of the two electrodes (2, 3).

3. Measuring device according to anyone of the preceding claims, characterized in that its components are borne by two separate assemblies, to wit on the one hand the electret (1), the two electrodes (2, 3) and the separating part (4), by a portable cassette (19, P) and on the other hand the measuring circuit (6) and preferably the shutter (8), by an apparatus (20, L), eventually fixed, comprising a housing (21, 29) adapted to receive the cassette removably.

4. Measuring device according to claim 3, characterized in that the measuring circuit comprises a memorizing computer enabling each of the cassettes positioned successively in this housing, to be identified, information for each positioning of a cassette representing the state of charge of electret contained in this cassette to be recorded and the development, for each consecutive placing in position of this cassette, of information representing discharge of the electret which has taken place since the preceding positioning.

5. Measuring device according to anyone of the preceding claims, characterized in that the double shutter (8) is mounted in cantilever style at the bottom of a fixed pocket (29) of a read-out apparatus (L) so that its two plates (8₁, 8₂) having respectively free edges (30, 31) with a bevelled or rounded profile, are adapted to guide the mounting of the cassette (P) into its straddled readout position, with a slight play, on these plates, for which the electret (1) is arranged between said plates whilst the two electrodes (2, 3) extend on the contrary along the outer surfaces of these plates.

6. Measuring device according to anyone of the preceding claims, characterized in that it is entirely contained within a pocket container.

7. Measuring device according to anyone of the preceding claims, characterized in that the container or cassette containing the electret chamber is fluid tight.

0 018 293

# Fig.1.

# Fig.2.

1

# Fig.3.

# Fig.4.